## Europäisches Patentamt

## European Patent Office

## Office européen des brevets

(11) Veröffentlichungsnummer: **0 025 431**
**B1**

(12)

# EUROPÄISCHE PATENTSCHRIFT

(45) Veröffentlichungstag der Patentschrift:
14.03.84

(51) Int. Cl.³: **B 32 B 15/08,** B 65 D 85/76,
B 65 D 65/40

(21) Anmeldenummer: 80890101.1

(22) Anmeldetag: 08.09.80

(54) Verpackungsmaterial zum Herstellen von Einschlagverpackungen.

(30) Priorität: 07.09.79 AT 5925/79

(43) Veröffentlichungstag der Anmeldung:
18.03.81 Patentblatt 81/11

(45) Bekanntmachung des Hinweises auf die Patenterteilung:
14.03.84 Patentblatt 84/11

(84) Benannte Vertragsstaaten:
BE CH DE FR GB IT LI NL SE

(56) Entgegenhaltungen:
DE - A - 1 913 600
FR - A - 2 345 360
FR - A - 2 355 731
FR - E - 95 042
GB - A - 1 192 751
GB - A - 1 427 531
US - A - 2 441 477

(73) Patentinhaber: FOLIENWALZWERK BRUEDER TEICH AKTIENGESELLSCHAFT,
A-3200 Obergrafendorf-Mühlhofen (AT)

(72) Erfinder: Jud, Wilfried, Dr.,
Kranzbichlerstrasse 41/11/86, A-3100 St. Poelten (AT)

(74) Vertreter: Stampfer, Heinz, ISOVOLTA Österreichische Isolierstoffwerke AG, A-2351 Wiener Neudorf (AT)

Verpackungsmaterial zum Herstellen von Einschlagverpackungen

Die Erfindung betrifft ein Verpackungsmaterial zum Herstellen von insbesondere für Weichkäse bestimmten Verpackungen, das ein luftdurchlässiges Trägermaterial, insbesondere eine perforierte Folie, aufweist, welches verpackungsinnenseitig mit einem eine Polyolefinschicht enthaltendem Sperrmaterial verbunden ist.

Ein solches Verpackungsmaterial ist aus der FR-A-2 345 360 bekannt. Bei diesem bekannten Verpackungsmaterial, das zur Herstellung von evakuierbaren Verpackungen für Käse mit Schimmelrasen bestimmt ist, ist eine perforierte Trägerschicht vorgesehen, die vollflächig mit einer heißsiegelfähigen Polyolefinschicht verbunden ist. Die Gesamtsauerstoffdurchlässigkeit des Verbundmaterials wird dabei von der Gesamtfläche der Perforierungen bestimmt, an denen die sauerstoffdurchlässige Polyolefinschicht nicht von dem Trägerschichtmaterial abgedeckt ist, und kann durch Variation dieser Gesamtfläche in kontrollierter Weise beschränkt werden. Die geringe Feuchtigkeitsdurchlässigkeit der Polyolefinschicht verzögert überdies ein Austrocknen des Käses.

Es wurde nun gefunden, daß bei Weichkäsepackungen die Ausbildung bzw. die Erhaltung des Schimmelrasens insbesondere an jenen Stellen beeinträchtigt wird, an denen das Verpackungsmaterial auf die Weichkäseoberfläche einen erhöhten Druck ausübt. Solche Stellen erhöhten Druckes konnten bei den bekannten für Weichkäse mit Schimmelrasen bestimmten Verpackungsmaterialien bisher aber nicht vermieden werden.

Hier will die Erfindung Abhilfe schaffen. Die Erfindung, wie sie in den Ansprüchen gekennzeichnet ist, löst die Aufgabe, ein Verpackungsmaterial für Einschlagverpackungen zu schaffen, das insbesondere zum Herstellen von Verpackungen für Weichkäse bestimmt ist und das ein Sperrmaterial mit einer Polyolefinschicht aufweist, die wegen ihrer hohen Sauerstoffdurchlässigkeit bzw. wegen ihrer geringen Feuchtigkeitsdurchlässigkeit eine Fortsetzung der Reifung des Käses ermöglicht und eine Erstickung des Schimmelrasens bzw. eine Austrocknung des Käses für längere Zeit verhindert, wobei bei dem erfindungsgemäßen Verpackungsmaterial zusätzlich einerseits der vom Verpackungsmaterial auf die Käseoberfläche wirkende Druck herabgesetzt und andererseits eine möglichst hohe Sauerstoffdurchlässigkeit erzielt werden soll.

Dies wird erfindungsgemäß dadurch erreicht, daß das luftdurchlässige Trägermaterial mit dem Sperrmaterial nur an bestimmten, nur einen kleinen Teil seiner Oberfläche einnehmenden Bereichen mit dem Sperrmaterial verbunden ist. Zwischen dem Trägermaterial und dem Sperrmaterial können sich dabei Luftpolster ausbilden, welche die Entstehung von Stellen erhöhten Druckes zwischen dem Verpackungsmaterial und dem Verpackungsgut weitgehend verhindern. Wegen der Tatsache, daß das Sperrmaterial nur über einen kleinen Teil seiner Oberfläche mit dem Trägermaterial verbunden ist, steht der überwiegende restliche Teil seiner Oberfläche für die Sauerstoffdiffusion durch das Sperrmaterial zur Verfügung. In einer Variante des Verpackungsmaterials sollen die mit ihm hergestellten Verpackungen sterilisierbar sein.

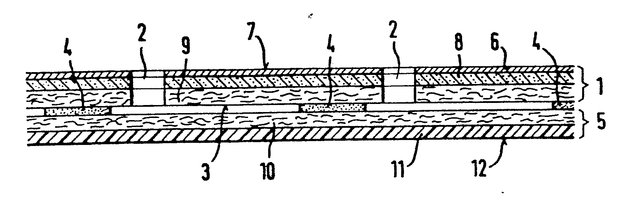

Im folgenden wird die Erfindung anhand von einem Ausführungsweg und der Figur näher erläutert.

Dabei zeigt die Figur das erfindungsgemäße Verpackungsmaterial schematisch im Schnitt.

Das Verpackungsmaterial (dessen einzelne Schichten in der Figur für eine bessere Übersichtlichkeit übertrieben dick dargestellt sind) umfaßt ein als Mehrschichtverbund aufgebautes Trägermaterial 1, das durch eine in einem regelmäßigen Raster hergestellte Nadelperforierung 2 luftdurchlässig gemacht ist.

An der dem Verpackungsgut zugewandten Oberfläche 3 des Trägermaterials 1 ist innerhalb schmaler streifenförmiger (in der Figur im Querschnitt dargestellter) Bereiche 4 ein flächiges Sperrmaterial 5 aufkaschiert.

Das Trägermaterial 1 umfaßt dabei eine Aluminiumfolie 6 mit einer Dicke von 9 μm, welche an ihrer dem Verpackungsgut abgewandten Oberfläche 7 einen gegebenenfalls eingefärbten Primerauftrag und darauf einen Aufdruck oder eine Lackierung aufweist. Die andere Oberfläche dieser Aluminiumfolie 6 weist eine Wachskaschierung 8 ($10-20$ g/m$^2$ Flächengewicht) gegen eine Kaschierseide 9 ($20-30$ g/m$^2$ Flächengewicht) auf. Mit Kaschierseide wird hier und in der Folge — wie in der Verpackungstechnik üblich — ein hochvoluminöses Papier sehr geringen Flächengewichts bezeichnet.

Das Sperrmaterial 5 besteht aus einer Kaschierseide 10 (Flächengewicht $20-30$ g/m$^2$), welche verpackungsgutseitig mit einer Polyäthylenbeschichtung 11 (LD-PE mit einem Flächengewicht von $10-20$ g/m$^2$) versehen ist. Diese Polyäthylenbeschichtung 11 weist an ihrer verpackungsgutseitigen Oberfläche 12 eine beim Beschichtungsvorgang aufgeprägte definierte rauhe Oberflächenstruktur mit einer mittleren Rauhtiefe von $2-8$ μm auf.

Nachstehend sei auf die Auswirkungen des besonderen Verpackungsmaterial-Aufbaues eingegangen.

Das Trägermaterial 1 gewährleistet die gute Faltbarkeit des Verpackungsmaterials und verleiht ihm die erforderliche mechanische Stabilität. Wegen der Perforierung des Trägermaterials 1 sowie seiner nur in schmalen streifenförmigen Bereichen 4 erfolgten Verbindung mit dem Sperrmaterial 5 gelangt Luft ziemlich gleichmäßig an die dem Verpackungsgut abgewandte Oberfläche des Sperrmaterials 5. Dieses stellt nun wegen seiner durchgehenden Polyäthylenbeschichtung 11 eine keimundurchlässige Sperre dar. Wegen der relativ geringen Wasserdampfdurchlässigkeit des Polyäthylens wird ferner ein Austrocknen des verpackten Käses weitgehend verhindert, während schließlich seine relativ hohe Sauerstoffdurchlässigkeit ein weiteres Reifen des Käses gewährleistet bzw. ein Ersticken des Schimmelrasens hintanhält. Die definierte Rauhigkeit der an den Schimmelrasen anliegenden Oberfläche 12 der Polyäthylenbeschichtung bewirkt, daß auf dem Schimmelrasen kein durchgehender Flächendruck ausgeübt wird, was — wie gefunden wurde — die Erhaltung des Schimmelrasens in seiner ursprünglichen Konsistenz begünstigt.

Gemäß einer vorteilhaften Variante des oben beschriebenen Beispiels wird statt der Wachskaschierung 8 eine Polyäthylenextrusionskaschierung (LD-PE mit einem Flächengewicht von 10—20 g/m²) aufgebracht. Diese Variante des Verpackungsmaterials ist sterilisierfähig, d. h. der Reifungsvorgang des Käses kann gegebenenfalls zu einer gewünschten Zeit durch Sterilisierung der Käsepackung unterbrochen werden.

## Patentansprüche

1. Verpackungsmaterial zum Herstellen von Verpackungen, insbesondere für Weichkäse, das ein luftdurchlässigen Trägermaterial (1), insbesondere eine perforierte Folie, aufweist, welches verpackungsinnenseitig mit einem eine Polyolefinschicht enthaltenden Sperrmaterial (5) verbunden ist, dadurch gekennzeichnet, daß für Einschlagverpackungen das Trägermaterial (1) nur an bestimmten, nur einen kleinen Teil seiner Oberfläche einnehmenden Bereichen mit dem Sperrmaterial (5) verbunden ist.

2. Verpackungsmaterial nach Anspruch 1, dadurch gekennzeichnet, daß sich die Polyolefinschicht (11) an der verpackungsgutseitigen Oberfläche des Sperrmaterials (5) befindet, wobei die verpackungsseitige Oberfläche (12) dieser Polyolefinschicht (11) eine Rauhigkeit mit einer mittleren Rauhtiefe von 2 bis 8 µm aufweist.

3. Verpackungsmaterial nach Anspruch 1 oder 2, dadurch gekennzeichnet, daß das Sperrmaterial (5) ein mit der Polyolefinschicht (11) versehenes fasriges flächiges Material, insbesondere Papier ist.

4. Verpackungsmaterial nach einem der Ansprüche 1 bis 3, dadurch gekennzeichnet, daß das luftdurchlässige Trägermaterial (1) ein mit in einem regelmäßigen Raster hergestellten Perforierung (2) versehenes Aluminiumfolien-Verbundmaterial ist.

5. Verpackungsmaterial nach Anspruch 4, dadurch gekennzeichnet, daß das Aluminiumfolien-Verbundmaterial eine verpackungsgutseitig mit einer Wachsschicht (8) kaschierte Aluminiumfolie (6) umfaßt.

6. Verpackungsmaterial nach Anspruch 4, dadurch gekennzeichnet, daß das Aluminiumfolien-Verbundmaterial eine verpackungsseitig mit einer Polyolefinschicht kaschierte Aluminiumfolie umfaßt.

## Claims

1. Packaging material for the preparation of packagings, especially for soft cheese, which possesses an airpermeable base material (1), especially a perforated foil, which is bonded, on the inner face of the packaging, with a barrier material (5) containing a polyolefine layer, characterised in that for wrapping packagings the base material (1) is bonded to the barrier material (5) only in defined areas which occupy only a small portion of its surface area.

2. Packaging material according to Claim 1, characterised in that the polyolefine layer (11) is on the surface of the barrier material (5) which faces the goods being packaged, and at the surface (12), on the packaging side, of this polyolefine layer (11) has a roughness with a mean peak-to-valley height of 2 to 8 µm.

3. Packaging material according to Claim 1 or 2, characterised in that the barrier material (5) is a fibrous sheet-like material, especially paper, provided with the polyolefine layer (11).

4. Packaging material according to one of Claims 1 to 3, characterised in that the air-permeable base material (1) is an aluminium foil laminate provided with perforations (2) produced according to a regular grid.

5. Packaging material according to Claim 4, characterised in that the aluminium foil laminate comprises an aluminium foil (6) to which is laminated a wax layer (8) on the side facing the goods being packaged.

6. Packaging material according to Claim 4, characterised in that the aluminium foil laminate comprises an aluminium foil to which is laminated a polyolefine layer on the side facing the goods being packaged.

## Revendications

1. Matériau d'emballage pour la confection de paquets, en particulier pour des fromages à pâte molle, comportant un matériau support (1) perméable à l'air, en particulier une feuille perforée qui est reliée à un matériau d'arrêt (5) contenant une couche de polyoléfine sur la face intérieure d'empaquetage, caractérisé en ce que le matériau support (1) pour la réalisation de l'empaquetage, est relié au matériau d'arrêt (5) uniquement sur des zones déterminées qui ne couvrent qu'une partie limitée de sa surface extérieure.

2. Matériau d'emballage selon la revendication 1, caractérisé en ce que la couche de polyoléfine (11) se trouve sur la surface supérieure du matériau d'arrêt (5) du côté de l'empaquetage et que la surface externe (12) de cette couche de polyoléfine (11) présente, sur la face d'empaquetage, une rugosité dont la profondeur moyenne est de 2 à 8 µm.

3. Matériau d'emballage selon la revendication 1 ou 2, caractérisé en ce que le matériau d'arrêt (5) est un matériau doté d'une couche de polyoléfine (11) et qui présente une structure fibreuse plane, telle que du papier.

4. Matériau d'emballage selon l'une des revendications 1 à 3, caractérisé en ce que le matériau support perméable à l'air (1) est un matériau de liaison à feuille d'aluminium qui présente des perforations (2) régulièrement réparties en un réseau.

5. Matériau d'emballage selon la revendication 4, caractérisé en ce que le mattériau de liaison à feuille d'aluminium comporte une feuille d'aluminium (6) recouverte, du côté du produit à empaqueter, d'une couche de cire (8).

6. Matériau d'emballage selon la revendication 4, caractérisé en ce que le matériau de liaison à feuille d'aluminium comporte une feuille d'aluminium recouverte, du côté du produit à empaqueter, d'une couche de polyoléfine.